# EUROPEAN PATENT APPLICATION

(11) **EP 1 720 058 A1**
(43) Date of publication of application: **08.11.2006**
(21) Application number: 05710755.9
(22) Date of filing: 21.02.2005
(51) Int. Cl.: G02B 27/02, H04N 5/64

(54) **IMAGE DISPLAY DEVICE**

(30) Priority: 19.02.2004 JP 2004043558
(71) Applicant: SCALAR CORP., Tokyo 173-0004 (JP)
(72) Inventor: YAMAMOTO, Masao, Scalar Corporation,, Tokyo 151-0053 (JP)
(74) Representative: Skone James, Robert Edmund
(86) International application number: PCT/JP2005/003224
(87) International publication number: WO 2005/081037

(57) **Abstract**

To make images of an image display apparatus that is mounted on the head easily viewable, an image display apparatus 1 includes a main body 10 that is formed in the shape of eyeglasses. The main body 10 can be fixed onto the head of a user. The main body 10 is provided with a display device 20 that is positioned in front of a user's left eye and a shielding plate 30 that is positioned in front of the user's right eye when the main body 10 is fixed to the user's head. The display device 20 causes an image from an in-built liquid crystal display to be formed in the user's left eye to show the image to the left eye. A position in the horizontal direction and an angle in the vertical direction of the display device 20 are adjustable.

## Description

### Technical Field

The present invention relates to a small image display apparatus that can be used while worn on a part of the body such as the head.

### Background Art

Head mount displays (HMD) that are used by mounting the display on a part of the body such as the head and which display images in front of the eyes of the user are being utilized in various fields including the field of virtual reality. Typical HMDs are designed, usually in the shape of a frame of goggles or large glasses, that block out outside light and force the user to see only the HMD's pictures. With an HMD used, the user can view images irrespective of the direction he or she faces but then again it gives the user visual isolation from the surrounding environment.

In recent years, small image display apparatus have been proposed that allow users to view images as well as the surrounding environment by means of presenting the images in a certain part of the field of vision.

This type of image display apparatus is, for example, disclosed in Japanese Patent Laid-Open. No. 7-209600. This image display apparatus contains a liquid crystal display (LCD), a reflection mirror, an ocular lens and other components contained within a single casing. A clip is snapped on the casing with which the image display apparatus is attached to a glasses or sunglasses frame. The casing can be attached near the upper outer side of either the left or right lens of eyeglasses. An image that is displayed on the LCD is directed to one eye of the user in a diagonal down direction through the reflecting mirror, the ocular lens, and a lens of glasses.

The image display apparatus of the type described allows the user to select whether he or she views the surrounding environment or looks at an image by moving his or her line of sight. It is highly valuable because of its usability during the daily life and availability at any places both inside and outside a building.

Therefore, this type of image display apparatus may be applicable for use as an audio-visual version of the portable headset stereo that plays back sounds and has significantly altered the lifestyles of young people.

In this type of image display apparatus it is extremely important to ensure that an image is easy to view.

However, since there are individual differences in people's facial features, there may be cases in which the positional relationship between the image display apparatus and the eye of the user is not adequate and the user can not view images with ease.

The present invention solves the above problem, and an object thereof is to improve an image display apparatus that displays an image in one part of a user's field of vision so that the image is easy to view.

### Disclosure of the Invention

In order to solve the above problem, the present inventors propose the following two inventions.

The first invention according to this application is an image display apparatus comprising a main body that can be mounted on the body of a user and is used by mounting the apparatus on the body of a user at a time of use.

On the main body of this image display apparatus is provided display means that is positioned in front of one eye of a user when using the image display apparatus, the display means direct an image light to form a predetermined image onto said one eye, thereby to provide said image to said one eye with said image included in a display region which is a part of the field of vision of said one eye, wherein the display means is provided on the main body such that the display means is movable in a horizontal direction when the main body is mounted on the body of a user, and a user having the main body mounted on their body can, for example, view the surrounding environment with both eyes by at least moving their line of sight.

According to this image display apparatus, since the display means is movable in a horizontal direction it is possible to adjust the position of the display means to achieve a suitable positional relationship between the display means and the eye of the user, enabling the user to view the image with ease.

In some cases one display means will be provided in the image display apparatus according to the first invention, and in some cases two display means will be provided. Providing one display means facilitates production of the apparatus at a low cost. Providing two of the display means increases the sense of realism when viewing an image.

When there are two display means, it is sufficient that at least one of the display means is provided on the main body so as to be movable in a horizontal direction when the main body is mounted on the body of a user. Naturally, both display means may be provided on the main body such that they are movable in a horizontal direction when the main body is mounted on the body of a user.

The first invention in a case where two display means are provided comprises a main body that is mountable onto the body of a user, and on the basis of an image display apparatus that is used by mounting the apparatus on the body of a user at a time of use, the main body is provided with first display means that is positioned in front of one eye of the user when using the image display apparatus which, by guiding an image light of a predetermined image to the one eye, thereby to provide said image to said one eye with said image included in a display region which is a part of the field of vision of the one eye, and second display means that is positioned in front of the other eye of the user when using the image display apparatus, the display means direct an image light to form a predetermined image onto said the other eye, thereby to provide said image to said the other eye with said image included in a display region which is a part of the field of vision of said the other eye, wherein a configuration can be adopted in which both the first display means and the second display means are provided on the main body in a manner to be movable in a horizontal direction when the main body is mounted on the body of the user, and a user having the main body mounted on their body can, for example, view the surrounding environment with both eyes by at least moving their line of sight.

In this connection, a specific configuration for enabling the display means according to the first invention to move in a horizontal direction when the main body is mounted on the body of a user is not particularly limited. When there are two display means, a configuration for allowing the display means to move in the horizontal direction when the main body is mounted on the body of a user may be the same or different for both display means.

In the first invention, when there is one display means, the main body may be provided with blocking means that is positioned in front of the other eye of the user when using the image display apparatus. Then the blocking means weakens the light directed to the blocked region that is a region in a field of view of the other eye and that substantially corresponds to the display region or corresponds to a wider region including the display region, so as to be weaker the light to the other eye from the blocked region than the light to the one eye from the display region.

The blocking means is useful for solving the following kind of retinal rivalry problem.

In an image display apparatus with one display means, when viewing the display with one eye the surrounding scenery can be seen with the other eye. In this case, a retinal rivalry problem arises.

The term "retinal rivalry" refers to a phenomenon in which only one of information entering from the right eye and information entering from the left eye comes to be recognized. Although normally there are some differences (for example, parallax of both eyes) in information that enters from the right eye and the left eye, there are usually many common points between the two pieces of information. In this case, the brain creates one piece of information from these two pieces of information and recognizes this as the "contents" that are being observed. In contrast, when two pieces of information that have few common points and differ greatly from each other enter from the right eye and the left eye, respectively, the brain is unable to successfully process these two pieces of information. In this case, the brain may give priority to the information from only one of the eyes, and perform processing so that it seems that only that information is being observed. In this case, although the observer is conscious that an image or scene based on the information that was given priority by the brain is being observed, the observer is not conscious that an image or scene based on the information that was not given priority by the brain is being observed.

In an image display apparatus as described above, the occurrence of retinal rivalry is noticeable. When retinal rivalry occurs, a situation in which the observer recognizes that the display is being observed and a situation in which the observer recognizes that scenery is being observed occur alternately. When a situation in which the display cannot be seen occurs frequently, the image display apparatus is not useful as an image display apparatus, and even if the user can manage to view the display with difficulty, the user will be significantly fatigued if retinal rivalry occurs frequently.

When the image display apparatus is provided with blocking means as described above, the field of vision of the eye on the side on which the blocking means is placed immediately in front of is blocked by the blocking means, enabling the eye to be placed in a so-called dead state, and thus the brain recognizes the user as viewing only information from the eye on the side on which the image from the display means is being viewed. Thus, the aforementioned retinal rivalry problem can be solved.

The above described blocking means may be provided on the main body in a condition whereby the blocking means is movable in a horizontal direction when the main body is mounted on the body of the user. If the blocking means positioned in front of the other eye of the user is so wider to weaken the light to the other eye from the blocked region that is a region in a field of view of the other eye and that substantially corresponds to the display region or corresponds to a wider region including the display region than the light to the one eye from the display region in the case when the display means moved, the blocking means need not be configured to move in the horizontal direction.

A second invention according to the present application is an image display apparatus comprising a main body that is mountable onto the body of a user, and is used by mounting the image display apparatus onto the body of a user at a time of use.

The main body is provided with display means that is positioned in front of one eye of a user when using the image display apparatus, the display means direct an image light to form a predetermined image onto said one eye, thereby to provide said image to said one eye with said image included in a display region which is a part of the field of vision of said one eye, wherein the display means is provided on the main body in a condition whereby the display means can swing in a vertical direction when the main body is mounted on the body of the user, and the user having the main body mounted on their body can, for example, view the surrounding environment with both eyes by at least moving their line of sight.

According to this image display apparatus, since the display means can swing in a vertical direction it is possible to adjust the position of the display means to achieve a suitable positional relationship between the display means and an eye of the user, enabling the user to view an image with ease.

In some cases one display means will be provided in the image display apparatus according to the second invention, and in some cases two display means will be provided. When one display means is provided, production of the apparatus at a low cost is facilitated. When two of the display means are provided, a sense of realism is increased more easily when viewing an image.

When there are two display means, it is sufficient that at least one of the display means is provided on the main body in a condition whereby it can swing in a vertical direction when the main body is mounted on the body of a user. Naturally, both display means may be provided on the main body in a condition whereby they can swing in a vertical direction when the main body is mounted on the body of a user.

In a case where two display means are provided, an image display apparatus according to the second invention of this application, for example, comprises a main body that is mountable onto the body of a user, and based on an image display apparatus that is used by mounting the apparatus onto the body of a user at a time of use, the main body is provided with first display means that is positioned in front of one eye of a user when using the image display apparatus, the display means direct an image light to form a predetermined image onto the one eye, thereby to provide said image to said one eye with said image included in a display region which is a part of the field of vision of said one eye, and second display means that is positioned in front of the other eye of the user when using the image display apparatus, the display means direct an image light to form a predetermined image onto the other eye, thereby to provide said image to said the other eye with said image included in a display region which is a part of the field of vision of said the other eye, wherein a configuration can be adopted whereby both the first display means and the second display means are provided on the main body so as to be swingable in a vertical direction when the main body is mounted on the body of the user, and the user that has the main body mounted on their body can, for example, view the surrounding environment with both eyes by at least moving their line of sight.

A specific configuration for enabling the display means according to the second invention to swing in a vertical direction is not particularly limited. When there are two display means, a configuration for enabling the display means to swing in a vertical direction when the main body is mounted on the body of a user may be the same or different for both display means.

For example, a specific configuration for enabling the display means according to the second invention to swing in a vertical direction may be as described hereunder.

A configuration can be adopted in which the main body is provided with two parallel upper and lower rods, wherein the display means is housed in a case, on the upper surface of the case is provided an upper groove that interfits with the upper of the two rods and on the undersurface thereof is provided a convex curved surface that is a saddle-shaped convex surface that contacts against the lower of the two rods, in which the swinging can be performed by sliding the lower of the two rods along the convex curved surface in a state in which the upper of the two rods is mated with the upper groove, In this case, by providing column parts that project from the convex curved surface at each end of the above described convex curved surface, the display means is unable to swing further than a position at which the lower of the two rods contacts against either of the column parts. Thus, the swinging range of the display means can be limited.

further, a configuration can be adopted in which the main body is provided with a protrusion that has a convex curved surface that is one part of a predetermined spherical surface, and that protrudes towards the front when the image display apparatus is mounted on the body of a user wherein the display means is housed in a case, the case is provided with a concave portion that has a concave curved surface as a curved surface that corresponds to the convex curved surface, and the protrusion and the concave portion are formed such that they attach together by magnetic attraction so that the display means can be fixed to the main body by causing the protrusion and the concave portion to attach together in a state in which the protrusion and the concave portion are mated, wherein the swinging can be performed by causing the concave portion to slide with respect to the protrusion. In this case, at least one of the protrusion and the concave portion is composed of a magnet. When one of the protrusion and the concave portion is composed by a magnet, the other may be composed of a metal that attaches to a magnet.

Further, a configuration can be adopted in which the main body is provided with a concave portion having a concave curved surface that opens towards the front when the image display apparatus is mounted on the body of a user, the display means is housed in a case, the case is provided with a protrusion having a convex curved surface being one part of a predetermined spherical surface that is a curved surface that corresponds to the concave curved surface, and the protrusion and the concave portion are formed such that they attach together by magnetic attraction so that the display means can be fixed to the main body by causing the protrusion and the concave portion to attach together in a state in which the protrusion and the concave portion are mated, wherein the swinging can be performed by causing the concave portion to slide with respect to the protrusion. In this case, at least one of the protrusion and the concave portion is composed by a magnet. When one of the protrusion and the concave portion is a magnet, the other may be composed by a metal that attaches to a magnet.

The above configurations can be adopted when either one or two display means are provided. In a case where two display means are provided and the above described swinging is performed for both display means, the aforementioned configurations can be adopted for both display means. When adopting a configuration for performing the above described swinging for each display means to cause both of the display means to swing, a different configuration may be adopted for each display means.

The configuration of the main body is not particularly limited for either the first invention or the second invention. For example, the main body can comprise two temples formed in a substantially rod shape that fix to the two ears of a user by latching the ends thereof onto the user's two ears, and a frame that is provided with the display means and in which the two ends are connected with the base ends of the temples and which is positioned in front of the face of the user when the tips of the two temples are latched onto the user's two ears.

In that case, both temples can be constructed so that an angle formed by the base end potion and the tip portion of each is variable, By constructing the temples in this manner, it is possible to swing the display means in the vertical direction when the main body is mounted on the body of a user by varying the angle formed by the base end portion and the tip portion of the two temples. This is also one example of a configuration for swinging the display means. This configuration can also be adopted when either one or two display means are provided. When two display means are provided, this configuration has the advantage that, without adopting any other device, the two display means can be swung together and angle adjustment can be performed collectively for the two display means.

A specific configuration for enabling angles formed by the base end portions and tip portions of the two temples to be varied is not particularly limited. For example, the base end portion and tip portion of each of the two temples may be formed of separate members, the separate members may be connected together by a connecting member, and the base end portion can be allowed to rotate with respect to the tip portion by employing the connecting member as a rotation shaft.

The display means according to the second invention comprises a display that displays the image and an optical system that guides an image light from the display to an eye of the user on the side to which the display means corresponds, and may also comprise a lens barrel that is configured to house at least one part of the optical system and to protrude in a direction facing the eye on the corresponding side when using the image display apparatus. When configured in this manner, the swinging can be carried out in a manner in which it is centered on a tip of the lens barrel. By adopting this configuration, since the tip position of the lens barrel does not change, when the swinging is performed with respect to the display means the image does not become difficult to view.

In order to perform the swinging in a manner that is centered on a tip portion of the lens barrel, for example, in a case in which separate members are employed for the base end portion and the tip portion of each of the temples, the separate members are connected together by a connecting member, and the base end portion is allowed to rotate with respect to the tip portion by employing the connecting member as a rotation shaft, a configuration may be adopted whereby when the two temples are viewed from the side the two connecting members and the tip portion of the lens barrel are positioned in a straight line.

The first invention and the second invention according to this application can be implemented alone or in combination.

### Brief Description of the Drawings

Fig. 1 is an oblique perspective view showing the entire image display apparatus according to the first embodiment when viewed from the upper rear direction;
Fig. 2 is an oblique perspective view showing a display device in the image display apparatus shown in Fig. 1 when viewed from the front;
Fig. 3A to Fig. 3C are side views that illustrate a method of swinging the display device in the image display apparatus shown in Fig. 1;
Fig. 4 is a perspective view showing the display device of the image display apparatus shown in Fig. 1 when viewed from above;
Fig. 5 is a cross section of a shielding plate shown in Fig. 1;
In Fig. 6, (L) is a view that conceptually shows what can be seen by the left eye of a user when using the image display apparatus shown in Fig. 1, and (R) is a view that conceptually shows what can be seen by the right eye of a user when using the image display apparatus shown in Fig. 1;
Fig. 7 is a view that conceptually shows what can be recognized by a user based on the illustrations shown in Fig. 6 when using the image display apparatus shown in Fig. 1;
Fig. 8 is an oblique perspective view showing an image display apparatus according to the second embodiment when viewed from the front;
Fig. 9 is an oblique perspective view showing the entire image display apparatus according to the third embodiment when viewed from the upper rear direction;
Fig. 10 is an oblique perspective view showing the entire image display apparatus according to the fourth embodiment when viewed from the upper rear direction;
Fig. 11 is a view showing the structure of a temple that is connected to a framework for the right eye of the image display apparatus according to the fourth embodiment;
Fig. 12A and Fig. 12B are side views showing a bent state of a temple of the image display apparatus according to the fourth embodiment;
Fig. 13 is a front view showing a usage state of the image display apparatus according to the fifth embodiment;
Fig. 14 is a side view showing a usage state of the image display apparatus according to the fifth embodiment;
Fig. 15 is a view showing the manner of attaching a display device to the main body of the image display apparatus according to the fifth embodiment;
Fig. 16A is a front view showing the structure of a fixing plate of the image display apparatus according to the sixth embodiment, and Fig. 16B is a sectional side view showing the structure of the same fixing plate;
Fig. 17 is an oblique perspective view of the display device of the image display apparatus according to the sixth embodiment when viewed from the back surface direction;
Fig. 18A is a front view showing the structure of a modification example of the fixing plate of the image display apparatus according to the sixth embodiment, and Fig. 18B is a sectional side view showing the structure of the modification example of the fixing plate; and
Fig. 19 is an oblique perspective view of the display device according to the modification example of the image display apparatus of the sixth embodiment when viewed from the back surface direction.

### Best Mode for Carrying Out the Invention

Hereunder, the first to sixth preferred embodiments of the present invention will be described in detail with reference to the drawings.

In the description of each embodiment, common symbols are used for common components and duplicate descriptions may be omitted in some cases.

### <<First Embodiment>>

Fig- 1 is an oblique perspective view that shows an entire image display apparatus 1 according to the first embodiment of this invention when viewed from the upper rear direction. In the description of the embodiments, the rear of the image display apparatus 1 refers to the side that is close to the face of a user when the image display apparatus 1 is mounted on the user's face.

The image display apparatus 1 includes a main body 10, a display device 20 for displaying images, and a blocking plate 30. As described below, the display device 20 and the blocking plate 30 are provided in a freely removable condition with respect to the main body 10.

The main body 10 is a device for holding the display device 20 and the blocking plate 30, and for fixing the image display apparatus 1 onto the head of a user. When using the image display apparatus 1, the main body 10 is mounted on the head of the user. By hanging the temples 11 of the main body 10 over the ears of a user, the image display apparatus 1 can be fixedly mounted onto the user's head. The temples 11 can be folded towards the framework 12 when the image display apparatus 1 is not in use.

The main body 10 according to this embodiment is formed in the shape of an eyeglass frame and includes two left and right temples 11, and a framework 12. Naturally, the main body 10 need not necessarily be in the shape of an eyeglass frame. The framework 12 includes a right eye framework 12R and a left eye framework 12L. The right eye framework 12R and the left eye framework 12L are linked by a bridge 12B. A nose pad is provided in the bridge 12B. The right eye framework 12R is a section of the framework 12 that is positioned in front of the right eye of a user when the image display apparatus 1 is fixedly mounted onto the head of the user, and the left eye framework 12L is a section of the framework 12 that is positioned in front of the left eye of a user when the image display apparatus 1 is fixedly mounted onto the head of the user. In this embodiment, the two frameworks 12L and 12R are formed in an annular shape, although the shape thereof need not necessarily be annular. More specifically, both of the frameworks 12L and 12R are made from metal rods, and are formed in an oblong shape in which the linear two ends of two parallel rods are connected together by semicircular arcs.

In this connection, a lens is not inserted on the inner side of the right eye framework 12R and the left eye framework 12L in this embodiment.

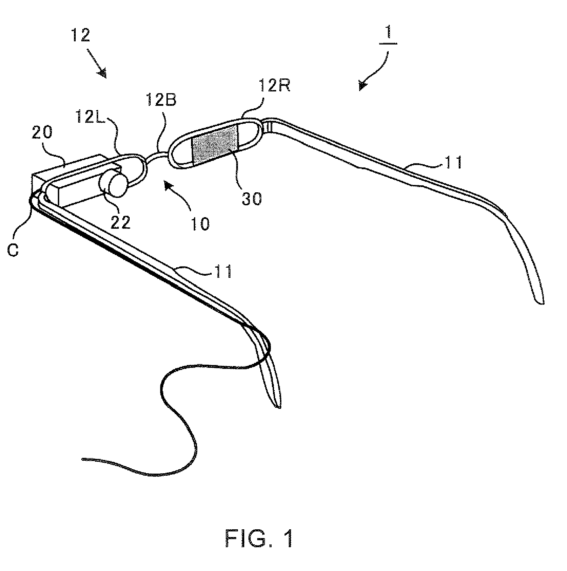

In the image display apparatus 1 of this embodiment, the display device 20 is attached to one of the right eye framework 12R and the left eye framework 12L, and the blocking plate 30 is attached to the other. In Fig. 1, the display device 20 is fixed on the inner side of the left eye framework 12L and the blocking plate 30 is fixed to the inner side of the right eye framework 12R. The positional relationship of the display device 20 and the blocking plate 30 may also be the opposite of that shown in Fig. 1. It is sufficient that the display device 20 is fixed after positioning the display device 20 in front of the eye with which it is easiest for the user to view the images.

The display device 20 corresponds to display means of this invention. When using the image display apparatus 1, the display device 20 is positioned in front of one eye of the user (in this embodiment, the left eye), and enables the user to view an image with the left eye by guiding the image light of a predetermined image to the left eye. The user views the aforementioned image in a state in which it is present in a display region that is one part of the field of vision of the left eye.

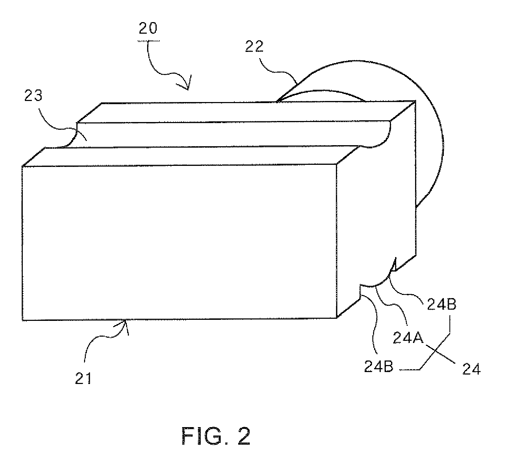

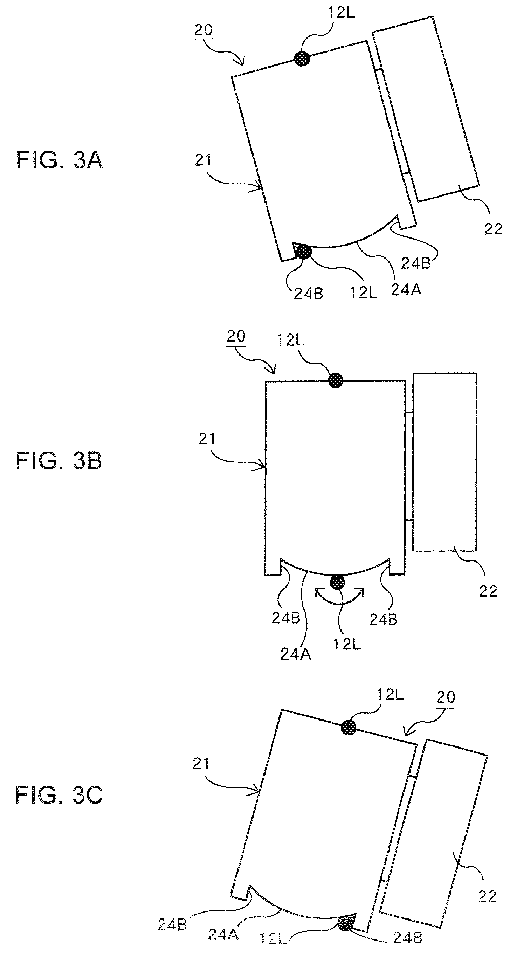

As shown in Fig. 2, the display device 20 comprises a case 21 that is formed in a substantially rectangular parallelepiped shape. The case 21 according to this embodiment is made of resin, although the material used for the case 21 is not limited thereto. A lens barrel 22 is provided at the rear surface of the case 21. The lens barrel 22 has a substantially cylindrical shape. On the top surface of the case 21 is provided a concave groove 23 having a substantially U-shaped cross section. On the lower surface of the case 21 is provided a curved surface portion 24 for swinging the display device 20 in a vertical direction. The curved surface portion 24 has a sectional form as shown in Fig. 3A to Fig. 3C. The curved surface portion 24 comprises a saddle-shaped convex surface 24A. At the two end portions of the convex surface 24A (two end portions in the direction of inclination of the saddle) are respectively provided column parts 24B in a condition whereby they protrude from the two end portions of the convex surface 24A.

The concave groove 23 is provided so as to interfit with the upper of the two parallel portions provided at the top and bottom of the left eye framework 12L. The curved surface portion 24 is provided so as to contact against the lower of the two parallel portions provided at the top and bottom of the left eye framework 12L. The display device 20 is configured so as to be attachable to the inner side of the left eye framework 12L by inserting the upper of the two parallel portions provided at the top and bottom of the left eye framework 12L into the concave groove 23 and contacting the lower of the two parallel portions provided at the top and bottom of the left eye framework 12L against the curved surface portion 24.

When the display device 20 is attached to the left eye framework 12L, the display device 20 can be swung in the vertical direction as shown in Fig. 3A to Fig. 3C. The swinging is carried out by sliding (Fig. 3B) the saddle-shaped convex surface 24A of the curved surface portion 24 in a manner to contact it against the lower of the two parallel portions provided at the top and bottom of the left eye framework 12L. The display device 20 can swing as far as either of the positions at which the lower of the two parallel portions provided at the top and bottom of the left eye framework 12L contacts against the column parts 24B (Fig. 3A, Fig. 3C). Further, the display device 20 can be fixed at an arbitrary position between the two positions shown in Fig. 3A and Fig. 3C.

When the display device 20 is attached to the left eye framework 12L, the display device 20 can be moved in a parallel manner in the same direction as the lengthwise direction of the two parallel portions provided at the top and bottom of the left eye framework 12L by sliding the concave groove 23 along the upper of the two parallel portions provided at the top and bottom of the left eye framework 12L in a state in which the concave groove 23 interfits with the upper of the two parallel portions provided at the top and bottom of the left eye framework 12L and sliding the convex surface 24A along the lower of the two parallel portions provided at the top and bottom of the left eye framework 12L in a state in which it contacts against the lower of the two parallel portions provided at the top and bottom of the left eye framework 12L.

Thus, a user can adjust the angle in the vertical direction and the position in the horizontal direction of the display device 20 so that it comes to a position in which an image that can be viewed using the display device 20 is easier to view.

The display device 20 is connected to a cable C. As described later, the cable C sends an image signal to the display device 20. The cable C is fixed to the temple 11 on the left side by, for example, crimping the cable with a ring-shaped member (a diagrammatic representation of this member is omitted). Further, the cable C is connected to the outside surface (the surface on the lateral side of the face when the image display apparatus 1 is mounted on the face of a user) of the display device 20.

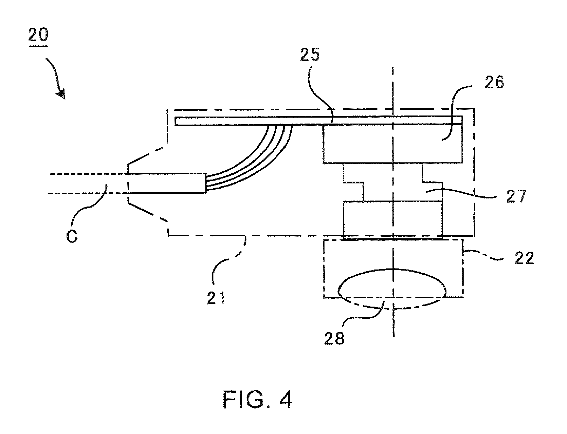

As shown in Fig. 4, a conversion board 25, a backlight unit 26 and a liquid crystal display 27 are provided inside the case 21.

A magnifying lens 28 is provided inside the lens barrel 22.

The conversion board 25 is connected to the cable C. The conversion board 25 converts image signals that are sent from outside via the cable C into signals that can be displayed on the liquid crystal display 27 and controls the liquid crystal display 27.

The backlight unit 26 includes a backlight that illuminates the liquid crystal display 27 from the rear, and it controls the backlight.

The liquid crystal display 27 displays a predetermined image that is a moving image or a still image under the control of the conversion board 25.

The magnifying lens 28 magnifies an image light of an image that is displayed on the liquid crystal display 27. In this connection, the magnifying lens 28 need not necessarily comprise only one lens, and in some cases it is composed by a plurality of lens. The magnifying lens 28 of this embodiment is configured to move forward and backward by rotating the lens barrel 22. As a result, even if there is some unevenness in the eyesight of the user, the aforementioned image can be properly formed in the eye of the user. Any kind of configuration may be adopted for moving the magnifying lens 28 forward and backward. For example, the configuration can be realized by employing a duplex structure for the lens barrel 22, threading the outer surface of an object inside these structures and the inner surface of an object outside these structures and screwing them together, and fixing the magnifying lens 28 to the inner surface of an object inside the lens barrel 22.

The conversion board 25 controls images to be displayed on the liquid crystal display 27. The conversion board 25 receives an image signal such as a video signal or an RGB signal from outside the display device 20 via the cable C, and displays an image that is based on this image signal on the liquid crystal display 27. Naturally, it is not necessary to provide the conversion board 25 inside the display device 20, and all or a part thereof may be provided outside the display device 20. A configuration may also be adopted whereby the image signal is received by wireless transmission.

The conversion board 25 may also be configured to include a television tuner. In this case, the conversion board 25 receives a radio wave for ordinary television broadcasting, and decodes this radio wave to display an image of the television broadcast on the liquid crystal display 27. An image displayed on the liquid crystal display 27 by the conversion board 25 is not limited thereto, and a displayed image may be from a wide range of possible sources such as an image that is played back on the basis of image data recorded on a recording medium such as a DVD or an image that is played back on the basis of image data generated by a personal computer or a computer such as a game device.

The blocking plate 30 corresponds to blocking means of this invention.

The blocking plate 30 is positioned in front of the other eye (in this embodiment, the right eye) of the user when using the image display apparatus 1. The blocking plate 30 makes light entering the user's right eye from the blocked region of the field of view of the user's right eye weaker than light entering user's left eye from the display region of the user's left eye. In this connection, the term "blocked region" refers to a region that substantially corresponds to the display region or a wider region that includes the region. This point is described later.

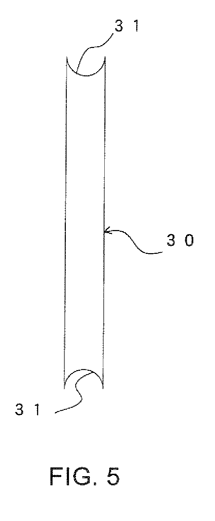

In this embodiment the blocking plate 30 is a rectangular plate body. As shown in Fig. 5, it comprises grooves 31 on the top and bottom thereof. The blocking plate 30 can be formed by resin, wood, paper, metal or the like, and in this embodiment it is formed of resin. Although this blocking plate 30 is made from opaque resin, the blocking plate 30 may be made from semitransparent resin as long as the degree of transparency is low. For example, material that is similar to a lens of a comparatively deep color with a transparency rate of 50% or below (for example, a plain lens of sunglasses) can be used for the blocking plate 30.

The blocking plate 30 can be moved in a parallel manner in the same direction as the lengthwise direction of the two parallel portions provided at the top and bottom of the right eye framework 12R.

The method of using the image display apparatus 1 according to this embodiment will now be described.

Preparations are carried out before actually using the image display apparatus 1.

The following items are performed as the preparations for using the image display apparatus 1.

The display device 20 is adjusted as part of the preparations for using the image display apparatus 1. When the display device 20 is not attached to the main body 10, this is done by attaching the display device 20 to the main body 10 and then adjusting the position in the horizontal direction of the display device 20 and the angle in the vertical direction. Further, the position of the blocking plate 30 is adjusted as part of the aforementioned preparations. The position of the blocking plate 30 is adjusted by moving the blocking plate 30 parallel to the horizontal direction. The magnifying lens 28 is also adjusted as part of the aforementioned preparations. The magnifying lens 28 is moved in the forward or backward direction in accordance with the power of vision of the user. Although according to this embodiment the magnifying lens 28 is moved forward or backward (moves in a direction along the optical axis) by rotating the lens barrel 22 as described above, a configuration may also be adopted in which movement of the magnifying lens 28 in the direction of the optical axis is performed by another means. Further, a configuration may be adopted whereby, for example, the magnifying lens 28 can be replaced for each lens barrel 22 in accordance with the power of vision of the user.

Next, the image display apparatus 1 is mounted onto the user's face and fixed. The fixing is performed by latching the temples 11 of the image display apparatus 1 onto the two ears of the user.

When the power of the object (for example, a DVD player or the like) that is connected to the cable C is turned on in this state and necessary operations are performed, an image signal is sent to the image display apparatus 1 via the cable C. This image signal is sent to the liquid crystal display 27 via the conversion board 25. The liquid crystal display 27 displays an image based on this image signal. An image light for this image that is light from a backlight included in the backlight unit 26 is sent to the left eye of the user through the magnifying lens 28 to form an image in the user's left eye.

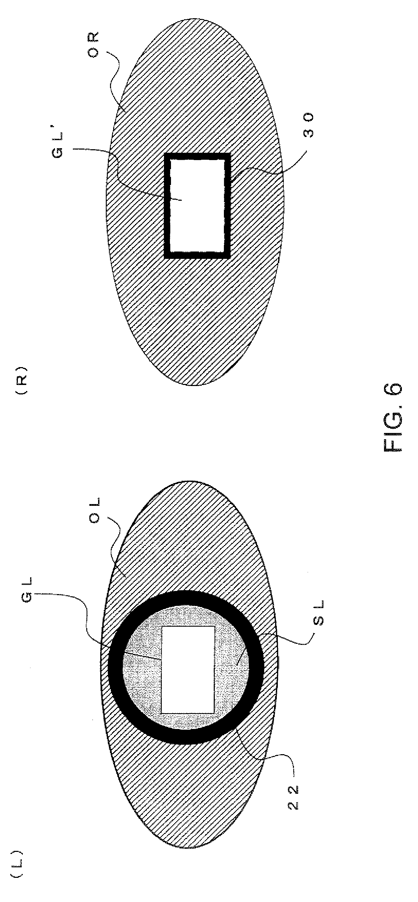

At this time, an image GL can be seen in the user's left eye as shown in Fig. 6 (L). As shown in Fig. 6 (L), the image GL can be seen as though the image GL is floating within a generally dark space SL. The region in which the image GL can be seen to be present corresponds to the display region of this invention. The space SL that is around the image GL corresponds to a pupil of the magnifying lens 28. Further, the tip of the lens barrel 22 can be vaguely seen around the space SL. The reason that the tip of the lens barrel 22 can only be seen vaguely is that the tip is closer to the user than the near point of the user's left eye. The surrounding environment OL can also be seen surrounding the lens barrel 22. The edges of the surrounding environment OL match the field of view of the user's left eye. The size of the display region in this embodiment is much smaller than 1/3 of the field of view of the user's left eye. The angle of view of this display region is about 20° in the horizontal direction.

According to this embodiment, when a user is viewing a display region, the user can also recognize the scenery of the surrounding environment without moving their line of sight. By moving their line of sight, the user can see more of the scenery of the surrounding environment with both eyes.

Meanwhile, the blocking plate 30 is positioned in front of the right eye of the user at this time. As shown in Fig. 6 (R), at this time the blocking plate 30 can be vaguely seen in the user's right eye. The reason that the blocking plate 30 can only be seen vaguely is that the blocking plate 30 is positioned closer to the right eye of the user than the near point of the user's right eye. At this time, the right eye of the user can mainly see the surrounding environment OR. The aforementioned blocking plate 30 appears as a black color in the field of view of the right eye in a condition in which it includes a region GL' that corresponds to the display region GL of the left eye. This means that light entering into the right eye from a region (corresponding to the blocked region of this invention) in which the blocking plate 30 is present becomes weaker than light entering into the left eye from a region in which the image GL can be seen. In this connection, although the region GL' is diagrammatically illustrated in the drawings for the purpose of description, it cannot actually be seen. Fundamentally, the entire portion including GL' appears as black as the blocking plate 30.

According to this embodiment, when a user is viewing the blocking plate 30, the user can also recognize the scenery of the surrounding environment without moving their line of sight. By moving their line of sight, the user can naturally see a larger region of the scenery of the surrounding environment.

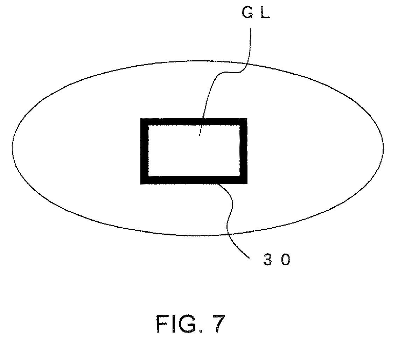

At this time, the image GL that was seen with the left eye and the blocking plate 30 that was seen with the right eye are synthesized within the brain and appear as shown in Fig. 7.

More specifically, it appears as if the image GL is on top of the black blocking plate 30. According to this embodiment, when the display region of the image GL within the field of view of the left eye is compared with the region corresponding thereto in the field of view of the right eye, it is found that the photic stimulation that the left eye receives from the display region becomes greater than the photic stimulation that the right eye receives from the region corresponding thereto, and thus the occurrence of retinal rivalry almost stops.

In this state the user can enjoy an image.

The user can adjust the position and angle of the display device 20 and can adjust the position of the blocking plate 30 while viewing the image GL, so that the image GL appears to be on top of the black blocking plate 30.

### <<Second Embodiment>>

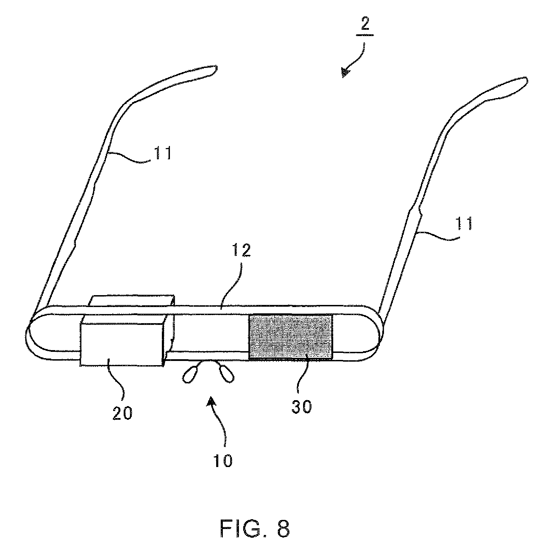

An image display apparatus 2 according to the second embodiment is shown in Fig. 8.

The image display apparatus 2 according to this embodiment is basically the same as the image display apparatus 1 according to the first embodiment.

The difference between the image display apparatus 2 and the image display apparatus 1 is the structure of the main body 10.

Although the main body 10 according to this embodiment comprises the temples 11 and the framework 12 as in the first embodiment, the framework 12 according to the second embodiment is formed in the shape of one ring, which differs to the framework 12 according to the first embodiment in which the left eye framework 12L and the right eye framework 12R that are each formed in the shape of a ring are connected by the bridge 12B.

Accordingly, the main body 10 of this embodiment is not formed in the shape of an eyeglasses frame.

Below the center section of the main body 10 in the image display apparatus 2 of the second embodiment is provided a nose pad that is similar to that attached to eyeglasses.

The structure of the display device 20 and the blocking plate 30 in the image display apparatus 2 of the second embodiment is the same as the structure of the display device 20 and the blocking plate 30 in the first embodiment. The method of attaching these to the framework 12 is also the same as the method of attaching the display device 20 and the blocking plate 30 to the main body 10 in the first embodiment. However, according to this embodiment, the display device 20 is configured to come in front of the right eye and the blocking plate 30 is configured to come in front of the left eye.

The position of the display device 20 in the horizontal direction and the angle thereof in the vertical direction can be adjusted, and the position of the blocking plate 30 can be adjusted.

The method of using the image display apparatus 2 according to the second embodiment is the same as that of the image display apparatus 1 in the first embodiment.

### <<Third Embodiment>>

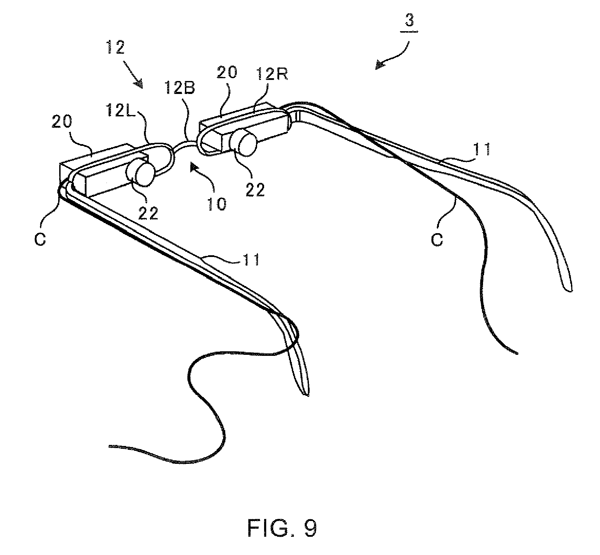

An image display apparatus 3 according to the third embodiment is shown in Fig. 9.

The image display apparatus 3 according to the third embodiment is basically the same as the image display apparatus 1 according to the first embodiment.

The difference between the image display apparatus 3 and the image display apparatus 1 is that, while the display device 20 and the blocking plate 30 were attached to the main body 10 of the image display apparatus 1 in the first embodiment, two display devices 20 are attached to the main body 10 of the image display apparatus 3 in the third embodiment. The main body 10 of the image display apparatus 3 of the third embodiment is identical to the main body 10 of the image display apparatus 1 of the first embodiment.

Of the two display devices 20, the display device 20 that is positioned in front of the left eye is identical to that of the image display apparatus 1 of the first embodiment. The display device 20 that is positioned in front of the right eye is configured to be bilaterally symmetrical with the display device 20 positioned in front of the left eye. The cable C that is connected to the display device 20 positioned in front of the right eye is fixed to the temple 11 on the right side by the same method as the cable C connected to the display device 20 positioned in front of the left eye.

It is possible to adjust the position in the horizontal direction and the angle in the vertical direction of both of the display devices 20 in the third embodiment.

The method of using the image display apparatus 3 according to the third embodiment will now be described.

The method of using the image display apparatus 3 according to the third embodiment is basically the same as the method of using the image display apparatus 1 according to the first embodiment.

The difference between the two methods is that, while in the preparations for using the image display apparatus 1 according to the first embodiment, adjustment of the single display device 20, positional adjustment of the blocking plate 30 and adjustment of the magnifying lens 28 are performed, in the preparations for using the image display apparatus 3 according to the third embodiment, adjustment of the two display devices 20 and adjustment of the magnifying lens 28 are performed, When the display devices 20 are not attached to the main body 10, adjustment of the two display devices 20 is performed by attaching the two display devices 20 to the main body 10, and then adjusting the positions in the horizontal direction and the angles in the vertical direction of the two display devices 20.

Upon completion of the above preparations, the image display apparatus 3 is mounted onto the face of a user and fixed. The fixing is performed by latching the temples 11 of the image display apparatus 3 onto the two ears of the user.

When the power of the object (for example, a DVD player or the like) that is connected to the cables C is turned on in this state and necessary operations are performed, an image signal is sent to the image display apparatus 3 via the cables C. This image signal is sent to the liquid crystal display 27 via the conversion board 25. The liquid crystal display 27 displays an image based on this image signal. An image light for this image that is light from a backlight included in the backlight unit 26 is sent to the right eye and left eye of the user through the magnifying lens 28 to form an image in the user's right eye and left eye.

At this time, the image GL can be seen in the user's left eye as shown in Fig. 6 (L). A similar image can be seen in the right eye.

At this time, the image GL that was seen with the left eye and the similar image thereto that was seen with the right eye are synthesized with the brain and appear as shown in Fig. 6 (L).

Thus, the user can see an image. Further, the user can also recognize the scenery of the surrounding environment without moving their line of sight when the user is viewing the display region, and by moving their line of sight, the user can see more of the scenery of the surrounding environment.

### <<Fourth Embodiment>>

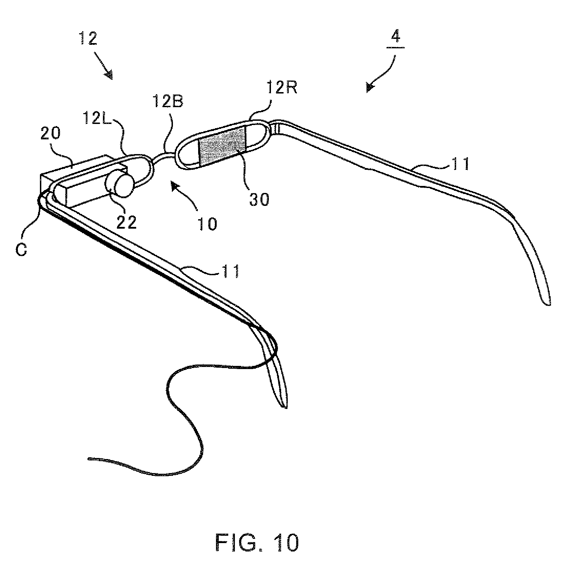

An outline of an image display apparatus 4 according to the fourth embodiment is shown in Fig. 10.

The image display apparatus 4 according to this embodiment is basically the same as the image display apparatus 1 according to the first embodiment.

The difference between the image display apparatus 4 and the image display apparatus 1 is the structure of the main body 10, and there is no significant difference in the other components.

Although the main body 10 according to this embodiment comprises the temples 11 and the framework 12 as in the first embodiment, the configuration of the temples 11 of the image display apparatus 4 according to the fourth embodiment is different to that of the temples 11 of the image display apparatus 1 according to the first embodiment.

The temples 11 of the image display apparatus 4 according to the fourth embodiment are both formed such that angles formed by the base end portion (portion on the framework 12 side) and the tip portion (portion that is distant from the framework 12 side) of each are variable. By varying the angles formed by the base end portions and the tip portions of the temples 11, it is possible to adjust the angle of the image display apparatus 4 according to the fourth embodiment in a vertical direction.

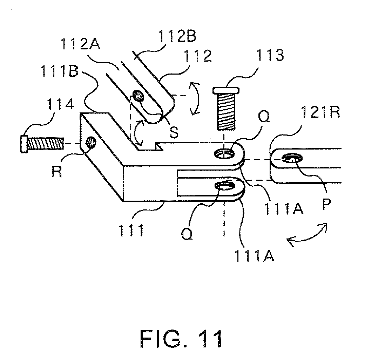

The configurations of the temples 11 according to the fourth embodiment will now be described in detail using Fig. 11. In this connection, since the configurations of the two temples 11 are bilaterally symmetrical and there are no other differences, only the configuration of the temple 11 on the right side will be described using Fig. 11.

Fig. 11 is a view showing the configuration of the temple 11 that is connected to the right eye framework 12R.

The temple 11 is separated into two parts. The temple 11 is composed by a base end side member 111 that connects to the right eye framework 12R, and a tip side member 112 that connects to the base end side member 111.

The base end side member 111 comprises two sandwiching members 111A that respectively contain holes Q and which sandwich from the top and bottom a plate member 121R having a hole P that is provided in the right eye framework 12R, and a base end side connecting member 111B having a hole R that is provided at a substantially 90° angle with respect to the sandwiching members 111A.

The tip side member 112 connects to the base end side connecting member 111B, and comprises a tip side connecting member 112A having a hole S and a tip side member main body 112B. The tip side member main body 112B is a part that latches on the ear of the user.

The plate member 121R and the sandwiching member 111A are connected by passing a bolt 113 completely through the holes P and Q as shown by the broken line in Fig. 11. Likewise, the base end side connecting member 111B and the tip side connecting member 112A are connected by passing a bolt 114 completely through the holes R and S as shown by the broken lines in Fig. 11.

Thus, the temple 11 can rotate in a horizontal plane employing the bolt 113 as an axis, and can close with respect to the framework 12. The temple 11 can also bend in a perpendicular plane employing the bolt 114 as an axis. As a result, the angle formed by the base end portion (portion on framework 12 side) and the tip portion (portion that is distant from the framework 12 side) of the temple 11 is variable.

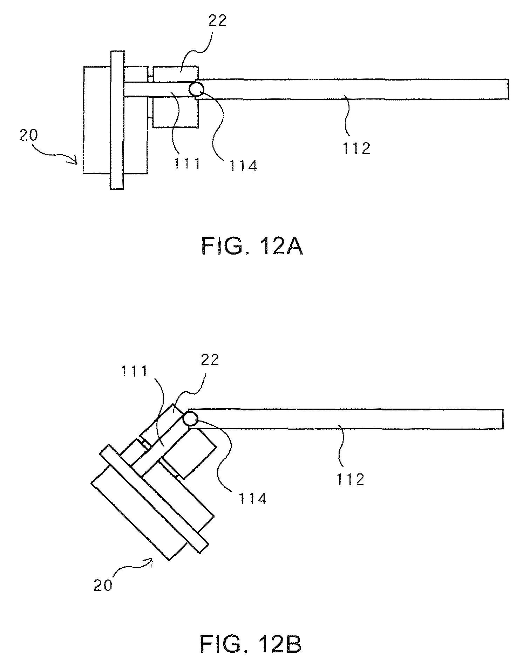

As shown in Fig. 10, the display device 20 and the blocking plate 30 are provided on the main body 10 of the image display apparatus 4 according to this embodiment. Further, as shown in Fig. 12A and Fig. 12B, the tip of the lens barrel 22 of the display device 20 is provided such that it is positioned on a straight line linking with the bolt 114 when the image display apparatus 4 is viewed from a side direction at a time of use.

Accordingly, even when the angle formed between the base end side member 111 and the tip side member 112 of the temple 11 was altered, the tip position of the lens barrel 22 does not change, as shown in Fig. 12A and Fig. 12B.

The method of using the image display apparatus 4 according to the fourth embodiment is basically the same as the method of using the image display apparatus 1 according to the first embodiment.

The only difference between the two methods is the manner of adjusting the angle of the display device 20. Prior to using the image display apparatus 4, or during use, the user holds the framework 12 with the user's fingers and adjusts the angle of the display device 20 by moving the framework 12 in the vertical direction.

It is also possible to attach two of the display devices 20 to the main body 10 according to the fourth embodiment by attaching a display device 20 to the main body 10 in place of the blocking plate 30. In this case, the tip of the lens barrel 22 of each of the two display devices 20 will be positioned on a straight line that links with the bolt 114 when the image display apparatus 4 is viewed from a lateral direction at the time of use.

### <<Fifth Embodiment>>

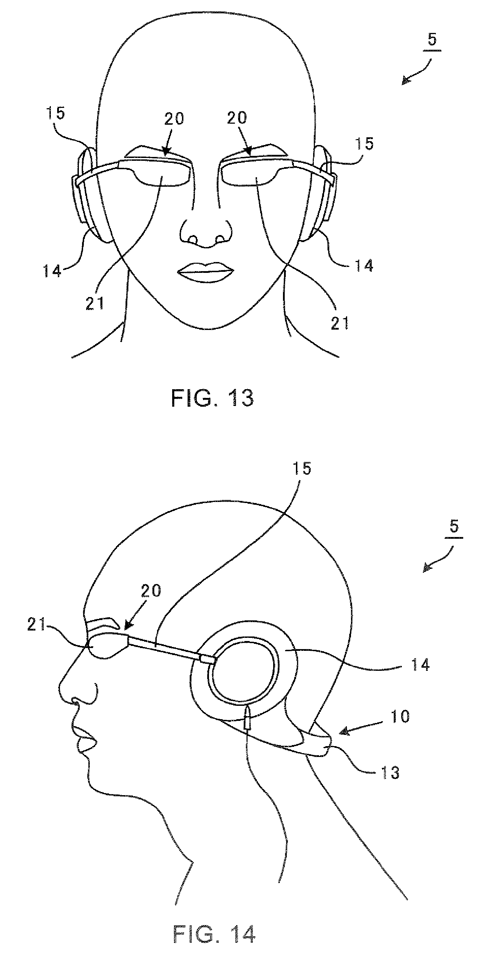

A usage state of an image display apparatus 5 according to the fifth embodiment is shown in Fig. 13 and Fig. 14.

The image display apparatus 5 according to this embodiment is basically the same as the image display apparatus 1 according to the first embodiment.

The image display apparatus 5 according to this embodiment differs from the image display apparatus 1 according to the first embodiment with respect to the configuration of the main body 10.

As shown in Fig. 13 and Fig. 14, the main body 10 of this embodiment is shaped like a set of headphones. More specifically, the main body 10 is shaped like behind-the-head style headphones.

The main body 10 comprises a curved arm 13 and ear cups 14 that are provided at both ends of the arm 13. The two ear caps 14 comprise ear pads, which are not illustrated in the drawings, at their edge portions, and comprise unshown speakers therein. As a result of this configuration, the main body 10 can function as headphones.

The main body 10 receives an audio signal from a device that sends an image signal to the display device 20 as described later, and reproduces sound in the speakers based on that signal to send the sound to the ears of the user.

Auxiliary arms 15 extend from both of the ear caps 14. The auxiliary arms 15 are structured such that their respective tips are positioned in the vicinity of the front of the eyes of the user that is using the image display apparatus 5. The auxiliary arms 15 are provided for the purpose of attaching the display devices 20 to the tips thereof.

In this connection, the display devices 20 according to the image display apparatus 5 of the fifth embodiment are conFig.d in the same manner as the display device 20 of the first embodiment, except that the shape of the case 21 is different.

Similarly to the display device 20 according to the image display apparatus 1 of the first embodiment, it is possible to adjust the position in the horizontal direction and the angle in the vertical direction of both of the display devices 20 of the image display apparatus 5.

That mechanism is as described below.

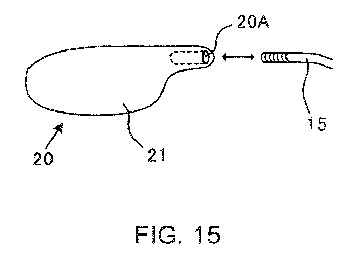

The tip of the auxiliary arm 15 is threaded as shown in Fig. 15.

Further, a hole 20A as shown in Fig. 15 is provided in an outer portion of the display device 20, and the inside edge of the hole 20A is threaded. More specifically, the tip of the auxiliary arm 15 can be fixed in the display device 20 by inserting the tip of the auxiliary arm 15 as a male screw into the hole 20A as a female screw and screwing them together.

At this time, the position in the horizontal direction and the angle in the vertical direction of the display device 20 can be adjusted based on the extent to which the display device 20 is rotated with respect to the auxiliary arm 15. In this connection, it can be considered that the cable C that is connected to the display device 20 may be twisted and become disconnected when the rotation in question is carried out. In order to avoid this situation, when constructing the display device 20 in this manner, the cable C is configured such that it is freely attachable and detachable from the display device 20, and the cable C is preferably detached from the display device 20 when carrying out the aforementioned rotation. Alternatively, the cable C is eliminated from the configuration and the display device 20 is configured to receive image signals by radio. In this connection, adopting a configuration in which the cable is eliminated and the display device 20 can receive image signals by radio similarly applies in the cases of the first to fourth embodiments and the sixth embodiment that is described below.

### <<Sixth Embodiment>>

The image display apparatus according to this embodiment is basically the same as the image display apparatus 1 according to the first embodiment.

There is no significant change between this embodiment and the first embodiment other than the structure for fixing the main body to the display device 20. However, the image display apparatus according to this embodiment is configured so that the display device 20 comes in front of the right eye and the blocking plate comes in front of the left eye.

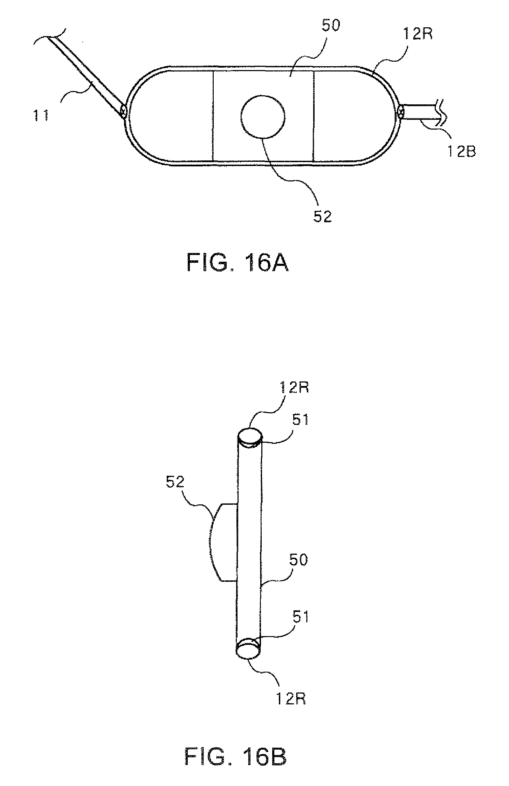

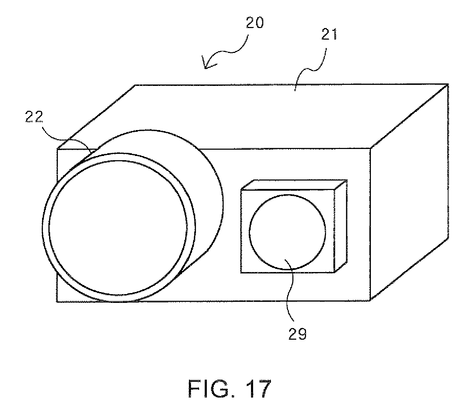

The method of attaching the display device 20 to the main body in the image display apparatus according to the sixth embodiment will now be described with reference to Fig. 16A, Fig. 16B and Fig. 17. Fig. 16A is a front view showing the structure of a fixing plate 50 in the image display apparatus according to the sixth embodiment. Fig. 16B is a sectional side view showing the structure of the fixing plate 50. Fig. 17 is an oblique perspective view of the display device 20 of the image display apparatus according to the sixth embodiment when viewed from the back surface direction.

The display device 20 according to this embodiment is attached to an inside portion of the right eye framework 12R. The structure of the main body including the right eye framework 12R according to this embodiment is the same as the structure of the main body of the first embodiment.

The right eye framework 12R of the main body comprises the fixing plate 50 that includes grooves 51 at the top and bottom thereof similarly to the blocking plate. A convex curved surface 52 is provided at the front of the fixing plate 50. The convex curved surface 52 is provided in a protruding condition in the direction of the front of the image display apparatus that is in use. The convex curved surface 52 is provided such that it is one part of a predetermined spherical surface.

Meanwhile, as shown in Fig. 17, a concave curved surface 29 is provided on the surface at the back side of the display device 20. The concave curved surface 29 is formed in a shape that corresponds to the aforementioned convex curved surface 52.

The convex curved surface 52 and the concave curved surface 29 are attached together by magnetic attraction. For example, by forming both of the members in which the convex curved surface 52 and the concave curved surface 29 are provided with magnets, or by forming one of the members with a magnet and forming the other member from a metal that attaches by magnetic attraction to the magnet, the convex curved surface 52 and the concave curved surface 29 can be provided so as to attach together by magnetic attraction.

In this case, when the concave curved surface 29 attaches by magnetic attraction to the convex curved surface 52, the display device 20 is attached to the main body. In this state, by sliding the concave curved surface 29 with respect to the convex curved surface 52, the angle of the display device 20 can be altered with respect to the fixing plate 50. For example, the display device 20 can slide in the vertical direction with respect to the main body.

Further, by moving the fixing plate 50 to which the display device 20 is attached in the horizontal direction, it is possible to adjust the position of the display device 20 in the horizontal direction.

Thus, in this image display apparatus also, it is possible to adjust the position in the horizontal direction and the angle in the vertical direction of the display device 20.

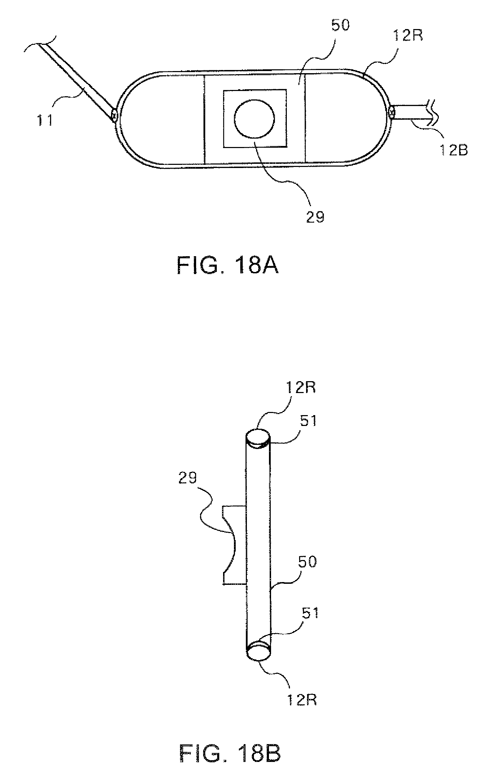

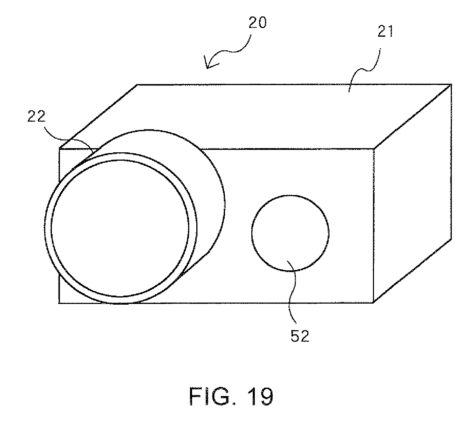

In this connection, as an opposite configuration to the case described above, it is also possible to provide the convex curved surface 52 on the display device 20 and the concave curved surface 29 on the fixing plate 50. In this case also, it is possible to adjust the position in the horizontal direction and the angle in the vertical direction of the display device 20. A front view of the fixing plate 50 in this case is shown in Fig. 18A, a sectional side view thereof is shown in Fig. 18B, and a back surface view of the display device 20 is shown in Fig. 19.

## Claims

1. An image display apparatus comprising a main body that is mountable onto a body of a user, and is used by mounting the apparatus onto the body of the user at a time of use, wherein:
the main body is provided with display means that is positioned in front of one eye of a user when using the image display apparatus, and the display means direct an image light to form a predetermined image onto said one eye, thereby to provide said image to said one eye with said image included in a display region which is a part of the field of vision of said one eye;
the display means is provided on the main body such that the display means is movable in a horizontal direction when the main body is mounted on the body of a user; and
the user having the main body mounted on their body can view the surrounding environment with both eyes by at least moving their line of sight.

2. The image display apparatus according to claim 1, wherein the main body is provided with blocking means that is positioned in front of the other eye of the user when using the image display apparatus, and the blocking means weakens the light directed to the blocked region that is a region in a field of view of the other eye and that substantially corresponds to the display region or corresponds to a wider region including the display region, so as to be weaker the light to the other eye from the blocked region than the light to the one eye from the display region.

3. An image display apparatus comprising a main body that is mountable onto a body of a user, and is used by mounting the apparatus onto the body of the user at a time of use, wherein:
the main body is provided with first display means that is positioned in front of one eye of a user when using the image display apparatus, and the display means direct an image light to form a predetermined image onto said one eye, thereby to provide said image to said one eye with said image included in a display region which is a part of the field of vision of said one eye, and second display means that is positioned in front of the other eye of the user when using the image display apparatus, and the display means direct an image light to form a predetermined image onto said the other eye, thereby to provide said image to said the other eye with said image included in a display region which is a part of the field of vision of said the other eye;
both the first display means and the second display means are provided on the main body in a manner to be swingable in a horizontal direction when the main body is mounted on the body of a user; and
the user having the main body mounted on their body can view the surrounding environment with both eyes by at least moving their line of sight.

4. An image display apparatus comprising a main body that is mountable onto a body of a user, and is used by mounting the apparatus onto the body of the user at a time of use, wherein:
the main body is provided with display means that is positioned in front of one eye of a user when using the image display apparatus, and the display means direct an image light to form a predetermined image onto said one eye, thereby to provide said image to said one eye with said image included in a display region which is a part of the field of vision of said one eye;
the display means is provided on the main body such that the display means can swing in a vertical direction when the main body is mounted on the body of the user; and
the user having the main body mounted on their body can view the surrounding environment with both eyes by at least moving their line of sight.

5. The image display apparatus according to claim 4, wherein:
the display means comprises a display that displays the image and an optical system that guides an image light from the display to the one eye of the user, and also comprises a lens barrel that is configured to house at least one part of the optical system and to protrude in a direction facing the one eye when using the image display apparatus; and
the swinging is performed in a manner that a center of the swinging is a tip of the lens barrel.

6. The image display apparatus according to claim 4, wherein:
the main body is provided with two parallel upper and lower rods;
the display means is housed in a case having, on the upper surface thereof, one upper groove that interfits with the upper of the rods, and on the undersurface thereof , a convex curved surface that is a saddle-shaped convex surface that contacts against the lower of the two rods; and
the swinging is performed by sliding the lower of the two rods along the convex curved surface in a state in which the upper of the two rods is mated with the upper groove.

7. The image display apparatus according to claim 4, wherein:
the main body is provided with a protrusion that has a convex curved surface that is one part of a predetermined spherical surface and that protrudes towards the front when the image display apparatus is mounted on the body of a user;
the display means is housed in a case, the case having a concave portion that has a concave curved surface as a curved surface that corresponds to the convex curved surface;
the protrusion and the concave portion are adopted to attach together by magnetic attraction;
the display means can be fixed to the main body by causing the protrusion and the concave portion to attach together in a state in which the protrusion and the concave portion are mated; and
the swinging can be performed by causing the concave portion to slide with respect to the protrusion.

8. The image display apparatus according to claim 4, wherein:
the main body is provided with a concave portion having a concave curved surface that opens towards the front when the image display apparatus is mounted on the body of a user;
the display means is housed in a case, the case being provided with a protrusion having a convex curved surface that is one part of a predetermined spherical surface and that is a curved surface corresponding to the concave curved surface;
the protrusion and the concave portion are adopted to attach together by magnetic attraction;
the display means can be fixed to the main body by causing the protrusion and the concave portion to attach together in a state in which the protrusion and the concave portion are mated; and
the swinging can be performed by causing the concave portion to slide with respect to the protrusion.

9. An image display apparatus comprising a main body that is mountable onto a body of a user, and is used by mounting the apparatus onto the body of the user at a time of use, wherein:
the main body is provided with first display means that is positioned in front of one eye of a user when using the image display apparatus, and the display means direct an image light to form a predetermined image onto said one eye, thereby to provide said image to said one eye with said image included in a display region which is a part of the field of vision of said one eye, and second display means that is positioned in front of the other eye of the user when using the image display apparatus, and the display means direct an image light to form a predetermined image onto said the other eye, thereby to provide said image to said the other eye with said image included in a display region which is a part of the field of vision of said the other eye;
both the first display means and the second display means are provided on the main body in a manner to be swingable in a vertical direction when the main body is mounted on the body of the user; and
the user having the main body mounted on their body can view the surrounding environment with both eyes by at least moving their line of sight.

10. The image display apparatus according to claim 9, the main body comprising:
two temples formed in a substantially rod shape that are fixed to both ears of the user by latching tips of the two temples onto the user's two ears; and
a frame that is provided with the first and second display means, in which two ends of the frame are connected with base ends of the temples, and the frame is positioned in front of a face of the user when the tips of the two temples are latched onto the user's two ears;
wherein both of the two temples are provided such that an angle formed by a base end portion and a tip portion of each temple is variable, and
by altering angles formed by the base end portions and the tip portions of the two temples, the first and second display means can swing in a vertical direction when the main body is mounted on the body of the user.

11. The image display apparatus according to claim 10, wherein:
the base end portion and tip portion of each of the two temples are formed of separate members and connected by a connecting member; and
the base end portion can be rotated with respect to the tip portion by employing the connecting member as a rotation shaft.

12. The image display apparatus according to claim 11, wherein:
both the first and second display means comprises a display that displays the image and an optical system that guides an image light from the display to an eye on a side corresponding to the display means, and also comprises a lens barrel that is configured to house at least one part of the optical system and to protrude in a direction facing the eye on the corresponding side when using the image display apparatus; and
when the two temples are viewed from the side, the two connecting members and the tip of the lens barrel are positioned in a straight line.
